# EUROPEAN PATENT APPLICATION

(11) **EP 1 335 321 A2**
(43) Date of publication of application: **13.08.2003**
(21) Application number: 03250111.6
(22) Date of filing: 08.01.2003
(51) Int. Cl.: G06N 5/00, G06F 17/60

(54) **Knowledge management system**

(30) Priority: 08.02.2002 GB 0202916
(71) Applicant: Fujitsu Services Limited, London, EC2A 1SL (GB)
(72) Inventor: Beton, William J., Wilmslow, Cheshire SK9 2ES (GB); Clayton, John, Sandbach, Cheshire CW11 4HS (GB); Willcock, Simon J., Bollington, Cheshire SK10 5PJ (GB)
(74) Representative: Guyatt, Derek Charles

(57) **Abstract**

A computer-implemented knowledge management method enables a user to send a query on one or more specified topics to a selected group of persons. A form is displayed to each recipient, allowing them to respond that they are unable to help or to recommend themselves or one or more other persons as being an expert on one or more of the specified topics. A recipient may also forward the query to another group of people, who can themselves respond. The responses are used to update a searchable database of persons and their areas of expertise.
The system thus automatically over time builds up a database defining a tacit knowledge network, based on users' recommendations.

## Description

### Background to the Invention

This invention relates to a method and apparatus for managing knowledge. More specifically, the invention is concerned with managing a tacit knowledge network within an organisation or other group of persons.

Today, many organisations realise that they are operating and competing in a knowledge economy, and see the knowledge that they hold to be of fundamental importance to their success.

The traditional approach to knowledge management has been to install an IT (information technology) system that enables information assets to be collected together and used by employees, perhaps over an intranet. However, a problem is that in general much of a company's knowledge is not written down; it is in the heads of its employees, and it is usually simply not feasible to write this all down and publish it. It has been estimated that such tacit knowledge makes up 90% percent of a company's knowledge assets.

The object of the invention is to provide an improved technical solution to the technical problem of managing such tacit knowledge in an automated manner.

### Summary of the Invention

According to the invention a computer-implemented knowledge management method comprises:
(a) enabling a user to send a query on one or more specified topics to a selected group of persons; and
(b) enabling each recipient of the query to view a form, the form including selectable options enabling the recipient to respond to the query in one of the following ways:
   (i) by replying, recommending one or more persons as being an expert on one or more of the specified topics, or
   (ii) by forwarding the query to another group of persons; and
(c) automatically updating a searchable database of persons and their areas of expertise, on the basis of the responses to the form.

Preferably, the form includes further options, to allow the recipient to recommend themselves, or to respond that they are unable to help.

### Brief Description of the Drawings

Figure 1 is a block diagram of a knowledge management system.
Figures 2 - 6 show typical user displays, illustrating the operation of the system.
Figure 7 shows the database schema of a knowledge database used in the knowledge management system.

### Description of an Embodiment of the Invention

One knowledge management system and method in accordance with the invention will now be described by way of example with reference to the accompanying drawings.

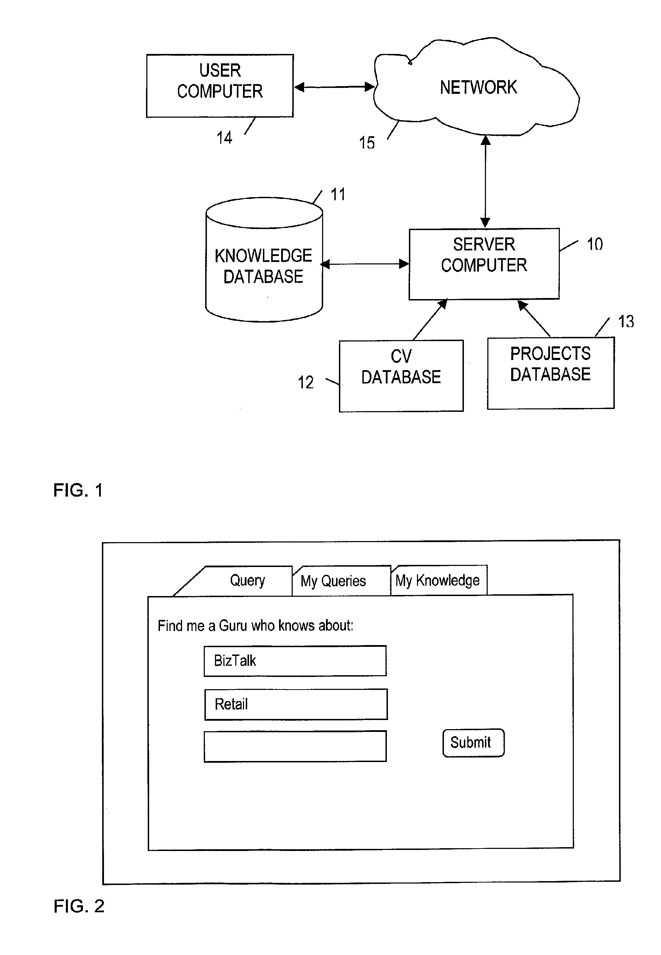

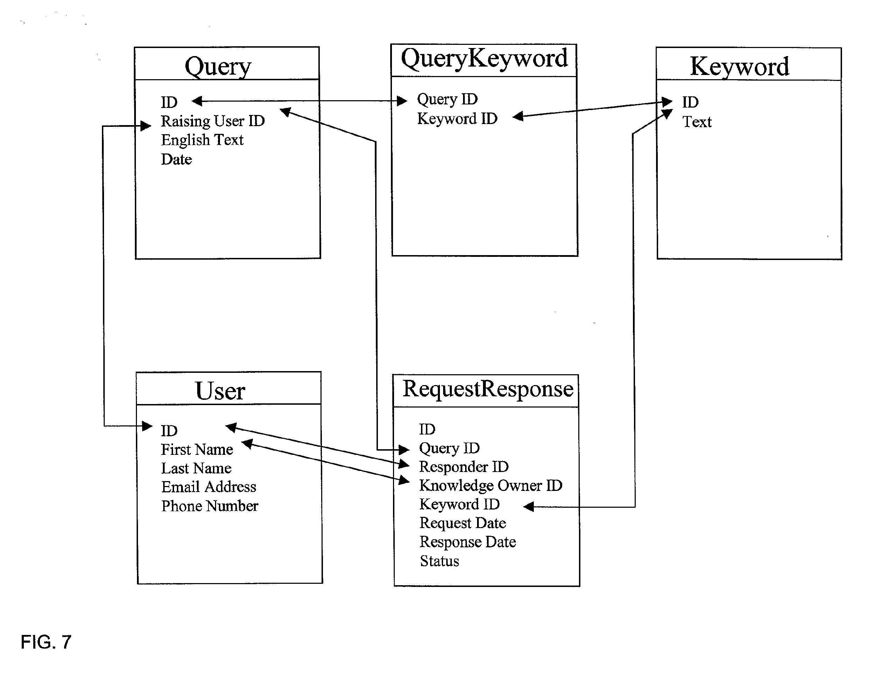

Figure 1 shows a knowledge management system comprising a server computer 10, which includes conventional webserver software.
The server has access to a knowledge database 11 for holding details of persons and their areas of expertise. The database includes a number of tables, as shown in figure 7.

The server may also have access to a number of legacy databases, such as a CV database 12 and a projects database 13, which hold pre-existing details of persons and their areas of expertise. The knowledge database 11 may be initially created by processing the databases 12, 13 to extract information.

The server can be accessed by a number of user computers 14 over a network 15, such as the Internet or an in-house intranet.
Each of the user computers 14 includes a conventional web-browser program, allowing it to access web pages stored on the server 10.

Users can access the knowledge management system by pointing their browsers at a particular web page on the server, referred to herein as the myGuruFinder home page. The user must complete a Logon procedure in order to access this page.

As shown in figure 2, the myGuruFinder home page includes three tabs, labelled "Query", "My Queries" and "My Knowledge". The "Query" tab contains a form including a number of text boxes. This allows the user to define a query by entering one or more keywords. In the example shown, the user has entered the keywords "BizTalk" and "Retail". The user can then click on a "Submit" button, which causes the query to be submitted to the server.

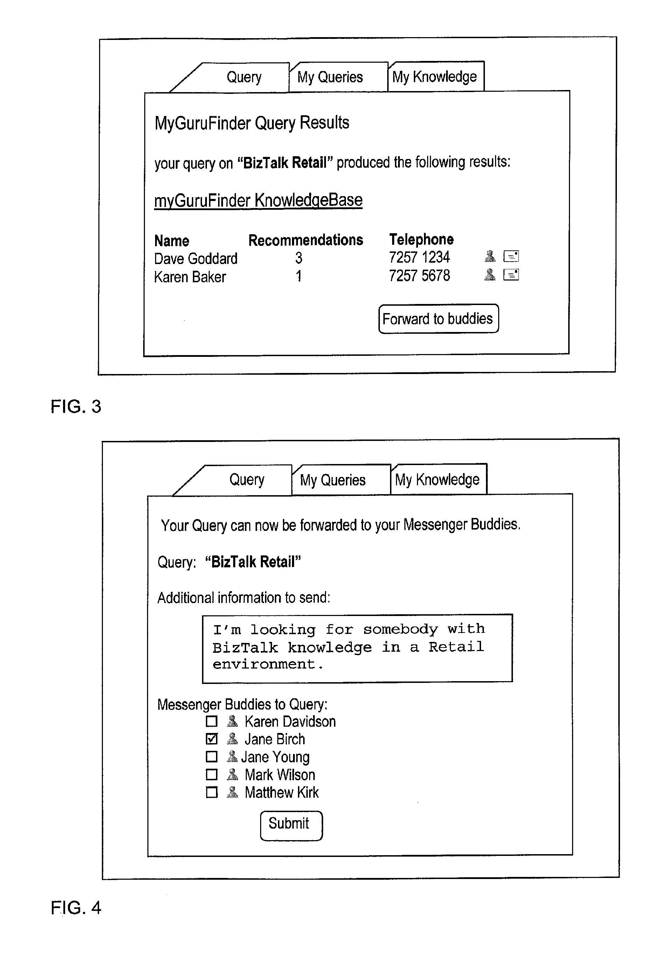

When the server receives this query, it searches the knowledge database 11, looking for experts, i.e. persons whose areas of expertise match the keywords in the query. This involves searching the RequestResponse table in the database, to find records that contain the keywords. The results of the search are returned to the user's browser. As shown in figure 3, the results consist of a list of experts, giving their names, telephone numbers, and a recommendation rating indicating the number of times this person has been recommended as having expertise in connection with these keywords. The recommendation rating for each person is obtained by counting the number of records in the RequestResponse table that link that person to the particular keyword. Each entry in the list may also include a number of icons representing different ways of contacting the person; for example e-mail or a messaging service such as Microsoft's Windows Messenger.

The system may also search the legacy databases (i.e. the CV database and projects database), looking for persons with the required expertise, and the results of these searches are also listed.

If one of the experts is selected, the user is then able to communicate with them using one of the above listed methods.
For example, a Messenger Buddy status icon next to the expert's name may indicate that the expert is online now, and so the user can instantly start a Messenger conversation with them. Alternatively, the user can phone the expert using the listed phone number, or send an e-mail by clicking on an e-mail icon.

If the user is not happy with the offered list of experts, then they may instead click on a "Forward to Buddies" icon, which takes them to the screen shown in figure 4. This includes a text box into which the user can type additional information about the query i.e. a plain English description of the query. (In the example shown the user types "I'm looking for somebody with BizTalk knowledge in a Retail environment"). The form also includes a check list, allowing the user to select one or more persons to send the query to. The check list includes a list of users the user already has a relationship with and has previously identified as knowing, for example the user's Windows Messenger "Buddy list".

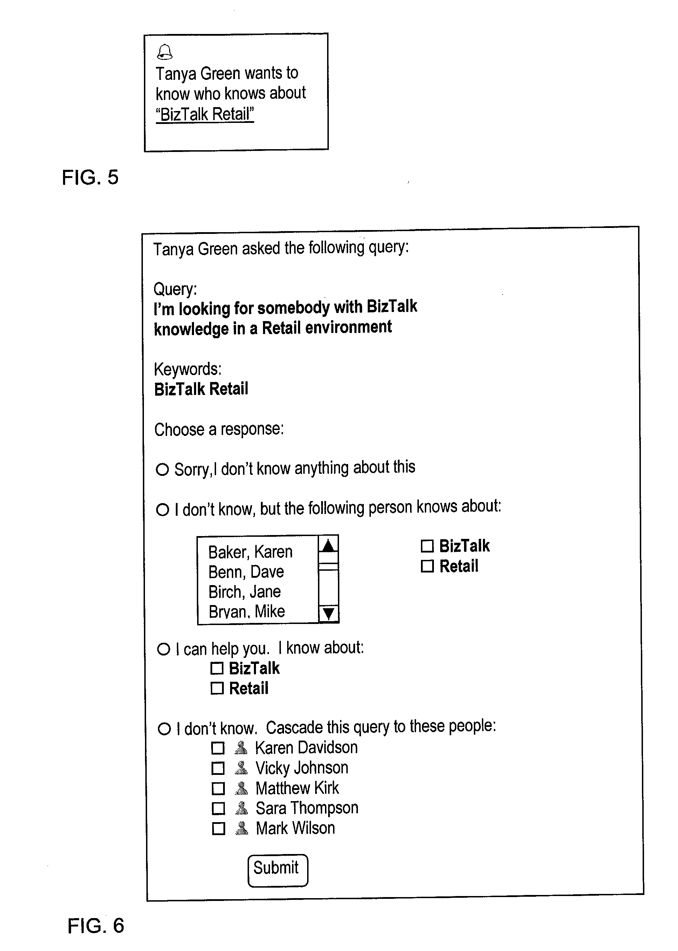

The query is then sent to all the selected persons. For example, if Microsoft Alerts is used to deliver the message, each recipient will see a message as shown in figure 5.

By clicking on a URL in the message, the recipient is presented with a form as shown in figure 6. This shows the keywords, the additional information about the query, and contains a checklist giving the recipient a number of options for response. As shown, these options include:
- Indicating that the recipient cannot answer the query.
- Recommending another person as having some or all of the expertise requested in the query.
- Indicating that the recipient has some or all of the expertise requested in the query.
- Forwarding the query to one or more other persons who have not received the query but may be able to help answer the query.

If the recipient chooses the final option in the above list, the query is automatically forwarded to the specified persons. This process may then repeat through further stages, with these other persons further forwarding the query or making further recommendations, and so on.

The server uses the recipient's response automatically to maintain and update the knowledge database 11. If the recipient recommends another person as having knowledge relevant to a particular keyword, a new record is created in the RequestResponse table, linking that person to this keyword.
This increases that person's recommendation rating in relation to that keyword.

The system also sends an alert back to the user who made the query, with a link to a results page summarising all the responses to the query.

At any time, a user may click on the "My Queries" tab at the top of the myGuruFinder page. This form shows the user all the previous queries that they have raised so a user can check the results and click through them. When the user looks at a previous query they will see the same report screen as the previous search results screen. The system re-runs the searches, and so the user can see any changes made since the search was first carried out (i.e. this is not a cached page; it is regenerated every time the report is run).

The "My Knowledge" tab on the myGuruFinder home page displays a list of existing recommendations that the user has received from other users. It allows a user to remove any existing recommendations if they feel the system incorrectly represents their knowledge. It also allows a user to specify or amend the areas in which they have expertise, by entering keywords; in other words, it allows users to recommend themselves. The system uses this information to update and maintain the knowledge database.

Figure 7 shows the database schema for the knowledge database 11. The database comprises five tables as shown.

Query table: A new record is created in this table for each query raised by a user. The Raising User ID field refers to the user who raised the query.

Keyword table: Each record in the Keyword table holds details of a keyword, or knowledge topic, e.g. "BizTalk" or "Retail".

QueryKeyword table: Each record in the QueryKeyword table relates a particular keyword to a particular query. Multiple records can be created in this table to relate multiple keywords to one query.

User table: Each record in the User table holds details of a person registered as a user of the system.

RequestResponse table: Each record in the RequestResponse table relates a user to a particular keyword or knowledge topic - e.g. "Fred knows about BizTalk". The Query ID field refers to the query in which this item of knowledge was identified. The Keyword ID field refers to the keyword in question. The Knowledge Owner ID field refers to the user who possesses knowledge of the keyword. The Responder ID field refers to the user who identified the knowledge owner. This could be the person who responded to a forwarded query or the knowledge owner themself if they submitted the knowledge item using the myKnowledge page. The Status field identifies one of the following request response states:
- No reply yet
- Don't know
- Recommendation (Knowledge Owner ID points to user with knowledge in that keyword)
- It's me (Knowledge Owner ID points to same user as Responder ID)
- Forwarded to other users.

In summary, it can be seen that the system provides a convenient way for users to locate experts on specified topics by emulating the human process of solving a problem by going from one person to another based on personal recommendations. It also automatically over time builds up a database defining a tacit knowledge network, based on recommendations. This tacit knowledge network gives a picture of the capabilities and connections within an organisation which grows as the system is used.

It is possible to use this tacit knowledge network as a way of controlling the distribution of information to users. Thus, for example, it would allow people with a strong recommendation to get more (or more detailed) information sent to them, while people with weaker recommendations would get less (or more appropriate) knowledge distributed to them.

As mentioned, the tacit knowledge network provides a picture of the capabilities and connections within an organisation. It can therefore be used to automatically rate an organisation or a person's capabilities. For example:
- It can be used to rate a person's value as a connected node within the network.
- It can be used to understand the depth and breath of understanding within the network in certain areas of expertise (e.g. how many people have been recommended or have made recommendations for a particular keyword).
- It can be used to understand where information is retained in an organisation (e.g. which parts of the organisation the top ten people for a particular topic work in, and whether there is a commonality to them.)

### Some possible modifications

It will be appreciated that many modifications may be made to the system described above without departing from the scope of the present invention. For example, although the embodiment described above is a web-based system, using conventional web server, web browser and messaging software, other embodiments of the invention may employ bespoke client and server software.

In an alternative embodiment, the RequestResponse table may include a Rating field, allowing users to specify rating (or weight) values for their recommendations. In this case, the recommendation rating for a particular person and topic could be derived by taking the average of the rating values in the RequestResponse table over those records that match that particular person and topic.

## Claims

1. A computer-implemented knowledge management method comprising:
(a) enabling a user to send a query on one or more specified topics to a selected group of persons; and
(b) enabling each recipient of the query to view a form, the form including selectable options enabling the recipient to respond to the query in one of the following ways:
(i) by replying, recommending one or more persons as being an expert on one or more of the specified topics, or
(ii) by forwarding the query to another group of persons; and
(c) automatically updating a searchable database of persons and their areas of expertise, on the basis of the responses to the form.

2. A method according to claim 1 wherein the step of automatically updating the database comprises creating a record linking a person with a particular topic.

3. A method according to claim 2 including the steps of:
(a) searching said database to find records linking persons to a specified topic; and
(b) displaying a list of persons linked to said specified topic, along with a rating for each person based on the number of records linking that person to the specified topic.

4. A method according to any preceding claim wherein the response form includes a selectable option enabling a recipient of the query to respond by stating that they themselves have expertise in one or more of the selected topics.

5. A method according to any preceding claim wherein the response form includes a selectable option enabling a recipient of the query to respond by replying, stating that they are unable to help.

6. A method according to any preceding claim, including enabling persons to manually modify entries in the database relating to themselves.

7. A method according to any preceding claim, including using the database to control distribution of information.

8. A method according to any preceding claim, including using the database to rate an organisation or to rate a person's capabilities.

9. A computer-implemented knowledge management method comprising:
(a) maintaining a database of persons and their areas of expertise;
(b) creating a query relating to a specified topic and specifying a group of persons to whom the query is to be addressed;
(c) sending an alert message containing a link to each of the specified group of persons;
(d) when a recipient of the alert message activates the link, displaying a response form, enabling the recipient to recommend one or more persons as being expert on one or more of the specified topics, and to specify other persons to whom the query should be forwarded;
(e) updating the database in view of any recommendation in the response form; and
(f) forwarding the alert message to any other persons specified in the response form.

10. A computer apparatus comprising:
(a) means for enabling a user to send a query on one or more specified topics to a selected group of persons; and
(b) enabling each recipient of the query to view a form, the form including selectable options enabling the recipient to respond in one of the following ways:
(i) by replying, recommending one or more persons as being an expert on one or more of the specified topics, or
(ii) by forwarding the query to other persons; and
(c) means for automatically updating a searchable database of persons and their areas of expertise, on the basis of the responses to the form.
